**Europäisches Patentamt**

**European Patent Office**

**Office européen des brevets**

(11) Veröffentlichungsnummer: **0 292 426**
**A2**

(12) **EUROPÄISCHE PATENTANMELDUNG**

(21) Anmeldenummer: **88810259.7**

(22) Anmeldetag: **25.04.88**

(51) Int. Cl.4: **G 01 B 7/31**
**B 25 J 19/00**

(30) Priorität: **18.05.87 CH 1896/87**

(43) Veröffentlichungstag der Anmeldung:
**23.11.88 Patentblatt 88/47**

(84) Benannte Vertragsstaaten:
**CH DE FR GB IT LI SE**

(71) Anmelder: **C.A. Weidmüller GmbH & Co.**
**Klingenbergstrasse 16**
**D-4930 Detmold (DE)**

(72) Erfinder: **Schmall, Karl-Heinz**
**Waldstrasse 20**
**D-7570 Baden-Baden 19 (DE)**

**Vornfett, Karl-Ulrich**
**Krippenhof 20**
**D-7570 Baden-Baden (DE)**

(74) Vertreter: **Hepp, Dieter et al**
**HEPP & Partner AG Marktgasse 18**
**CH-9500 Wil (CH)**

(54) Einrichtung zum Ermitteln der Lage eines rotationssymmetrischen Körpers bezüglich einer Referenzachse.

(57) Die Einrichtung besitzt auf zwei ringförmigen Trägerscheiben (1, 2) in zwei getrennten, zur Referenzachse (R) senkrechten Ebenen je wenigstens drei gleiche Empfängerspulen (3, 5, 6). Die Empfängerspulen (3, 5, 6) sind von der Referenzachse (R) beabstandet und bezüglich einander um diese verdreht. Eine Senderspule (9) dient dazu, ein bezüglich der Referenzachse (R) symmetrisches Hochfrequenzfeld zu erzeugen, das in allen Empfängerspulen (3, 5, 6) gleiche Spannungen induziert. Ein in die Empfängerspulenanordnung eingeführter, rotationssymmetrischer, elektrisch leitender Körper (7) stört die Symmetrie des Hochfrequenzfeldes nur dann nicht, wenn er mit der Referenzachse (R) genau koaxial ist. Wenn der Körper (7) in der Ebene einer der Trägerscheiben (1, 2) nicht genau mit der Referenzachse (R) zentriert ist, sind die in den Empfängerspulen (3, 5, 6) dieser Trägerscheibe induzierten Spannungen nicht gleich. Die induzierten Spannungen werden in einer Auswertungsschaltung miteinander verglichen. Ausgangssignale der Auswertungsschaltung geben nicht nur die Exzentrizität des Körpers (7) in einer Ebene an, sondern auch die Exzentrizität in der zweiten Ebene oder die Schrägstellung des Körpers (7) bezüglich der Referenzachse (R).

Fig. 1

EP 0 292 426 A2

**Beschreibung**

## Einrichtung zum Ermitteln der Lage eines rotationssymmetrischen Körpers bezüglich einer Referenzachse

Die Erfindung bezieht sich auf eine Einrichtung zum Ermitteln der Lage eines rotationssymmetrischen, elektrisch leitenden Körpers bezüglich einer Referenzachse.

In der Automatisierungstechnik, insbesondere in der Robotertechnik, werden in steigendem Masse Einrichtungen benötigt, die es gestatten, Bauteile auszurichten und ggf. zu erkennen oder in der automatischen Bearbeitung Werkzeuge und Werkstücke miteinander auszurichten. Dies erfordert neben der Erkennung der zentralen Lage eines Gegenstandes, z.B. eines runden Zapfens, auch die Erkennung der richtigen Stellung der Achse des Gegenstandes.

Zur Lösung dieser Aufgaben werden gegenwärtig verschiedene Verfahren angewendet, in den meisten Fällen bisher nur versuchsweise. So werden beispielsweise Videokameras verwendet, um einen Gegenstand zu erkennen, wobei der Gegenstand und ein Werkzeug, z.B. eine Roboterhand, zugleich im Videobild erscheinen, so dass ihre Zuordnung zueinander durch Verarbeiten der Bildinhalte über teilweise aufwendige Hard- und Softwarelösungen möglich wird. Solche Einrichtungen sind jedoch sehr kostspielig. Zudem versagen sie, wenn die Sicht für die Kamera durch zwischenliegende Körper beeinträchtigt oder versperrt ist. Für dreidimensionale Bildwiedergabe und -verarbeitung wird der Aufwand mit solchen Einrichtungen sehr hoch.

Es sind auch bereits Lichtstrahl-Einrichtungen bekannt, die entweder im Lichtschnitt-Verfahren die Konturen von Körpern erkennen können oder die die Oberfläche von Körpern durch Laser-Scanning-Verfahren punktweise fortlaufend abtasten und aus den reflektierten Signalen über komplexe Bildverarbeitung die für die Führung einer Maschine oder eines Roboters erforderlichen Signale gewinnen. Auch solche optoelektronischen Einrichtungen versagen, wenn der Abtaststrahl keinen freien Zugang zum Objekt oder Werkstück hat. Da solche Einrichtungen zumeist auch relativ gross und schwer sind, lassen sie sich unmittelbar am Werkzeug bzw. an der Arbeitsstelle nur selten unterbringen. Deshalb ist auch ihre Genauigkeit begrenzt, weil sie zumeist nur aus einer montagebedingten Entfernung Kontur und Lage erkennen können.

Die Aufgabe der Erfindung besteht daher darin, eine Einrichtung der eingangs angegebenen Art zu schaffen, welche die geschilderten Nachteile bekannter Einrichtungen nicht aufweist.

In der EP-A-O 130 940 ist in Fig. 4a eine induktive Sensoreinrichtung dargestellt, in der auf einem flächigen, ringförmigen Träger vier Sensor-Empfängerspulen, einander paarweise symmetrisch gegenüberliegend, angeordnet sind. Mit einer solchen Sensoreinrichtung wäre es grundsätzlich möglich, einen elektrisch leitenden Körper im Inneren des Sensorringes zu lokalisieren. Die vier Empfängerspulen liefern für alle vier Quadranten der Spulenebene Signale, welche die Lage des Körpers innerhalb des Sensorringes charakterisieren. Damit könnte zum Beispiel die Zentrierung eines zylindrischen Metallkörpers im Sensorring festgestellt werden. Bei genau zentrischer Lage in allen vier Quadranten der Ebene sind die in den Empfängerspulen induzierten Signale einander gleich. Die genaue Zentrierung des Körpers ist somit an den Ausgangssignalen der vier Empfängerspulen erkenntlich. Weicht die Lage des zylindrischen Körpers von der Zentrierung auch nur geringfügig (im Hundertstelmillimeterbereich) ab, so entstehen in den Empfängerspulen quadrantendifferente Signale, deren Auswertung die Lage des zylindrischen Körpers gegenüber dem genauen Zentrum angibt.

Mit einer solchen Einrichtung ist es somit möglich, einen rotationssymmetrischen, elektrisch leitenden Körper, der sich innerhalb oder in der Nähe der Ringöffnung befindet, zu orten.

Die beschriebene Anordnung kann jedoch nicht feststellen, ob der Körper so liegt, dass seine Achse mit der rechtwinklig zur Spulenebene verlaufenden Sensor-Symmetrieachse übereinstimmt, wenn der Körper sich genau im Zentrum befindet.

Die erfindungsgemässe Einrichtung, mit der die angegebene Aufgabe gelöst wird, ist dadurch gekennzeichnet, dass in wenigstens einer ersten und einer zweiten zur Referenzachse etwa senkrechten Ebene je wenigstens drei gleiche, von der Referenzachse beabstandete und bezüglich einander um die Referenzachse verdrehte Empfängerspulen angeordnet sind, in denen durch wenigstens eine an einen HF-Generator angeschlossene, bezüglich der Referenzachse zentrierte Senderspule Spannungen induzierbar sind, welche einer Auswertungsschaltung zum Vergleichen der induzierten Spannungen und Erzeugen von die Exzentrizität des Körpers bezüglich der Referenzachse in der betreffenden Ebene anzeigenden Signalen zugeführt sind.

Die Einrichtung erkennt die Exzentrizität eines in den die Referenzachse umgebenden Raum zwischen den Empfängerspulen eingeführten elektrisch leitenden Körpers in zwei Ebenen. Sie kann für jede Ebene Signale abgeben, welche die Lage des Körpers in allen vier Quadranten charakterisieren. So kann nicht nur festgestellt werden, ob die Achse des Körpers in einer der Ebenen im Zentrum der betreffenden Empfängerspulenanordnung liegt, sondern auch, ob die Achse des Körpers mit der Referenzachse übereinstimmt, die durch die Zentren der Empfängerspulenanordnungen in den beiden Ebenen verläuft. Die erzeugten Signale können eine mehrachsige Maschine so steuern, dass alle Koordinatenachsen der Empfängerspulenanordnung zur Maschinensteuerung beitragen.

Die Empfängerspulenanordnung ist in ihren Abmessungen vielseitig an die jeweils geforderten Verhältnisse anpassbar und mit geringem Raumbedarf herstellbar, insbesondere wenn die Spulen wie in der EP-A-O 130 940 beschrieben auf flächigen Trägern angeordnet werden. Ihre Auflösung kann bei geeigneter Anpassung an die Grösse des Körpers ausserordentlich hoch sein und bis in den Hundertstelmillimeterbereich gehen. Sie ist unabhängig von der Umgebungsatmosphäre; Staub und Schmutz beeinträchtigen ihre Funktion im Gegensatz zu allen optoelektronischen Systemen nicht.

Da die Ausgangssignale der Empfängerspulenanordnung als schnelle Analoggrössen ohne weitere Signalverarbeitung direkt für Nachführaufgaben verwendbar sind, lässt sich die erfindungsgemässe Einrichtung kostengünstig fertigen; ihre Entwicklung ist durch Wegfall aufwendiger Software und Hardware zur Aufbereitung der Signale ebenfalls kostengünstig durchführbar.

Eine Forderung, die an die erfindungsgemässe Einrichtung und ähnliche mit einer Sensorspulenanordnung arbeitende Einrichtungen zum Ermitteln der Lage eines rotationssymmetrischen Körpers bezüglich einer Referenzachse gestellt werden kann, besteht darin, dass die Einrichtung über ihre gesamte Lebensdauer eine hohe Genauigkeit gewährleisten soll. Um dieser Forderung zu genügen, enthält eine solche Einrichtung gemäss der weiteren Erfindung eine Eichvorrichtung mit einer Nachbildung des rotationssymmetrischen Körpers und Mitteln zum Einführen dieser Nachbildung in die Sensorspulenanordnung in eine mit der Referenzachse koaxiale Lage. Bei in die Spulenanordnung eingeführter Nachbildung können die Ausgangssignale einer elektronischen Auswehrtungsschaltung, der die Signale der Sensorpulen zugeführt sind, auf vorbestimmte Werte eingestellt werden, insbesondere auf null. Diese Eichung wird in den jeweils gewünschten Zeitabständen wiederholt.

Ausführungsbeispiele der Erfindung werden nachstehend anhand der Zeichnungen näher erläutert. In diesen zeigen:

Fig. 1 die Sensorspulenanordnung einer erfindungsgemässen Einrichtung schematisch im Schnitt,

Fig. 2 eine vereinfachte perspektivische Darstellung der Sensorspulenanordnung von Fig. 1,

Fig. 3 eine Draufsicht und

Fig. 4 eine Unteransicht der oberen Empfängerspulen-Trägerscheibe von Fig. 1 und 2,

Fig. 5 eine abgewandelte Ausführungsform der Sensorspulenanordnung,

Fig. 6 noch eine andere Ausführungsform der Sensorspulenanordnung, mit einem zusätzlichen Abstandssensor,

Fig. 7 und

Fig. 8 je eine Sensorspulenanordnung mit einem anderen Abstandssensor,

Fig. 9 eine Sensorspulenanordnung mit zusätzlichen, in einer dritten Ebene angeordneten Empfängerspulen,

Fig. 10 eine Sensorspulenanordnung mit einer Eichvorrichtung und

Fig. 11 die Anordnung von Fig. 10 bei anderer Stellung der Teile.

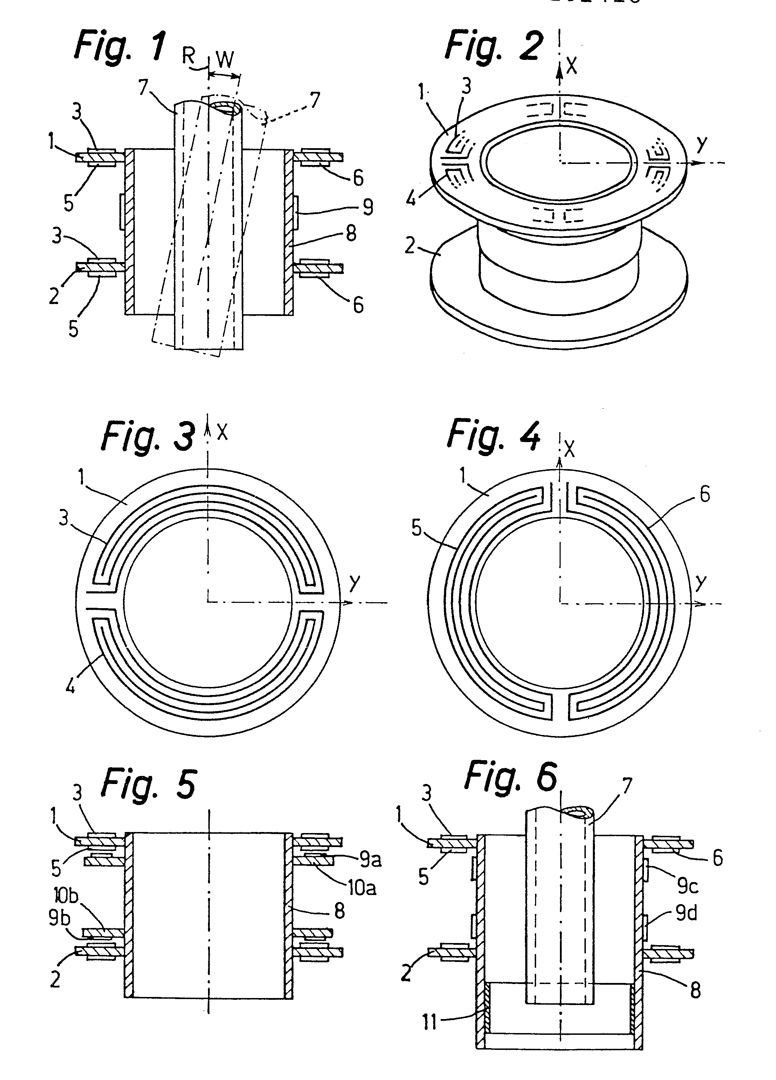

Die dargestellten Sensorspulenanordnungen besitzen jeweils in zwei parallelen, zu einer Referenzachse R senkrechten Ebenen je eine ringförmige Empfängerspulen-Trägerscheibe 1 bzw. 2. Auf jeder Trägerscheibe sind jeweils vier gleiche Empfängerspulen 3, 4, 5 und 6 getragen, die einander bezüglich des Schnittpunktes der Referenzachse R mit der Ebene der betreffenden Trägerscheibe 1 bzw. 2 paarweise gegenüberliegen, wie insbesondere aus den Figuren 3 und 4 hervorgeht. Aus diesen Figuren ist ferner ersichtlich, dass das auf der Unterseite jeder Trägerscheibe getragene Paar der Empfängerspulen 5 und 6 gegen das auf der Oberseite getragene Paar der Empfängerspulen 3 und 4 um 90° um die Referenzachse R verdreht ist. Ein bezüglich der Referenzachse symmetrisches Erregerfeld induziert in allen vier Spulen jeder Trägerscheibe gleiche Spannungen. Die Empfängerspulen 3 und 4 bzw. 5 und 6 jedes Paares sind miteinander so in Reihe geschaltet, dass an ihrem gemeinsamen Ausgang keine Spannung auftritt, solange die in den beiden Spulen induzierten Spannungen gleich sind. Wenn jedoch das Erregerfeld durch einen elektrisch leitenden, rotationssymmetrischen Körper, der in die Sensorspulenanordnung eingeführt wird und in der Ebene einer Trägerscheibe 1 oder 2 nicht genau mit der Referenzachse zentriert ist, verzerrt wird, dann sind die in den Empfängerspulen der betreffenden Trägerscheibe induzierten Spannungen nicht mehr gleich. Am Ausgang jedes Spulenpaares tritt dann eine Spannung auf, die die Exzentrizität des leitenden Körpers in der Ebene der betreffenden Trägerscheibe in Richtung zur einen oder anderen Spule des Paares anzeigt, d.h. in der x-Richtung (Fig. 2) für das Spulenpaar 3, 4 und in der y-Richtung für das Spulenpaar 5, 6. Ein solcher Körper ist in Fig. 1 als Rohr 7 dargestellt, und zwar mit ausgezogenen Linien in einer zentrierten und zur Referenzachse koaxialen Lage und mit unterbrochenen Linien in einer abweichenden Lage.

Die Ausgangssignale aller Empfängerspulen bzw. Empfängerspulenpaare sind einer nicht dargestellten Auswertungsschaltung zugeführt, welche Signale erzeugt, die die Exzentrizität des in die Sensorspulenanordnung eingeführten Körpers, wie des Rohres 7, in den Ebenen der beiden Trägerscheiben 1 und 2 und/oder die Neigung w des Körpers zur Referenzachse R jeweils nach Betrag und Richtung angeben. Die Ausgangssignale der Auswertungsschaltung können beispielsweise einer Roboter-Steuerung zugeführt werden, damit der Roboter so lange entweder die Sensorspulenanordnung oder den in diese eingeführten Körper in der Lage verändert, bis die Körperachse in den Ebenen beider Trägerscheiben 1 und 2 mit der Referenzachse zusammenfällt. Dabei können Ausgangssignale, welche die Abweichung der Körperachse von der Referenzachse in den beiden Ebenen in x-Richtung und in y-Richtung anzeigen, entweder abwechselnd nacheinander oder nach einer geeigneten Vorverarbeitung untereinander gemischt der Robotersteuerung angeboten werden.

Es ist klar, dass für die Erkennung der Exzentrizität eines leitenden Körpers in jeder Ebene grundsätzlich drei Empfängerspulen, beispielsweise um jeweils 120° gegeneinander um die Referenzachse verdreht, ausreichen würden. Mit den beschriebenen vier Spulen in jeder Ebene, die einander paarweise gegenüberliegen, wobei jedes Paar bei ungestörtem Erregerfeld die Summenspannung null abgibt, ist jedoch die Auswertung einfacher.

Die beiden Empfängerspulen-Trägerscheiben 1 und 2 sind in allen dargestellten Ausführungsformen jeweils durch einen Hohlzylinder 8 aus elektrisch isolierendem Material, beispielsweise Kunststoff oder Keramik, als mechanische Abstandshalterung miteinander verbunden. Die Scheiben 1 und 2 bilden zusammen mit dem Hohlzylinder 8 einen gemeinsamen Spulenträger für alle Spulen. Die verschiedenen Spulen können aber natürlich auch in anderer Weise gehalten sein.

Das bezüglich der Referenzachse R symmetrische Erregerfeld wird mit wenigstens einer Senderspule erzeugt, die an einen HF-Generator (nicht dargestellt) angeschlossen ist. Eine solche Senderspule 9 kann gemäss Fig. 1 mittig zwischen den beiden Trägerscheiben 1 und 2 auf dem Hohlzylinder 8 getragen sein und auf die Empfängerspulen 3, 4, 5, 6 beider Trägerscheiben 1 und 2 einwirken.

Es ist aber auch möglich, jeder der Trägerscheiben 1 und 2 je eine eigene Senderspule zuzuordnen. Gemäss Fig. 5 sind zwei solche Senderspulen 9a und 9b ebenfalls als Flachspulen ausgebildet und auf den Trä gerscheiben 1 bzw. 2 benachbarten Trägerscheiben 10a bzw. 10b getragen. In Fig. 6 sind hingegen zwei wieder zylindrische Senderspulen 9c und 9d den Trägerscheiben 1 bzw. 2 benachbart auf dem Hohlzylinder 8 getragen. Zwei getrennte Senderspulen, wie die Spulen 9a und 9b oder die Spulen 9c und 9d, können prallel oder in Reihe zueinander an einen gemeinsamen HF-Generator angeschlossen sein. Es ist aber auch möglich, die beiden Senderspulen mit getrennten HF-Generatoren zu speisen, die mit der gleichen Frequenz oder mit unterschiedlichen Frequenzen arbeiten. Durch die Verwendung unterschiedlicher Frequenzen für jedes Teilsystem lässt sich die gegenseitige Beeinflussung herabsetzen oder vermeiden und dadurch die Auflösung und Genauigkeit des Gesamtsystems verbessern.

Durch eine weitere Ausbildung der erfindungsgemaessen Einrichtung lassen sich noch zusätzliche Dimensionen erkennen, so dass es möglich ist, neben der Zentrierung und der Ausrichtung der Referenzachse zur Körperachse auch noch die Eintauchtiefe des Körpers in die Sensorspulenanordnung als Ausgangssignal zu erhalten. Erfindungsgemäss werden hierzu ein oder mehrere zusätzliche Sensorvorrichtungen an der Sensorspulenanordnung angebracht. Eine solche zusätzliche Sensorvorrichtung kann eine induktive Sensorvorrichtung sein, die mit der gleichen Senderspule wie die Empfängerspulen 3, 4, 5, 6 erregt sein kann oder eine eigene Erregung aufweisen kann. Sie kann auch eine einfache ringförmige Spule aufweisen, deren Induktivitätsänderung beim Eintritt des Körpers in die Sensorspulenanordnung in bekannter Weise ermittelt wird (z.B. gemäss EP-A-0 007 034 oder FR-A-2 394 783). Die zusätzliche Sensorvorrichtung kann aber auch kapazitiver Art sein. Die Fig. 6 zeigt eine um einen kapazitiven Sensor 11 erweiterte Sensorspulenanordnung der schon beschriebenen Art. Der kapazitive Sensor 11 hat die Form eines im Hohlzylinder 8 angeordneten Metallrohres, dessen Kapa zität gegen einen in die Sensorspulenanordnung eingeführten elektrisch leitenden Körper, der weider als Rohr 7 dargestellt ist, mit grösser werdender Eintauchtiefe zunimmt. Die Veränderung der Kapazität wird in bekannter Weise entweder als Frequenzveränderung eines Oszillators ausgewertet oder in der schaltungstechnischen Form einer Messbrücke mit einer bekannten Kapazität verglichen, um kapazitätsabhängige Ausgangssignale zu erhalten, die die Eintauchtiefe des Rohres 7 in den Bereich des kapazitiven Sensors 11 charakterisieren. Jedenfalls ist die Art und Weise, wie die kapazitive, von der Lage des Rohres 7 abhängige Veränderung im Bereich des Sensors 11 weiterverarbeitet wird, vom erfindungsgemässen Gedanken der Kombination eines solchen Sensors mit der zuvor beschriebenen Empfängerspulenanordnung nicht abhängig.

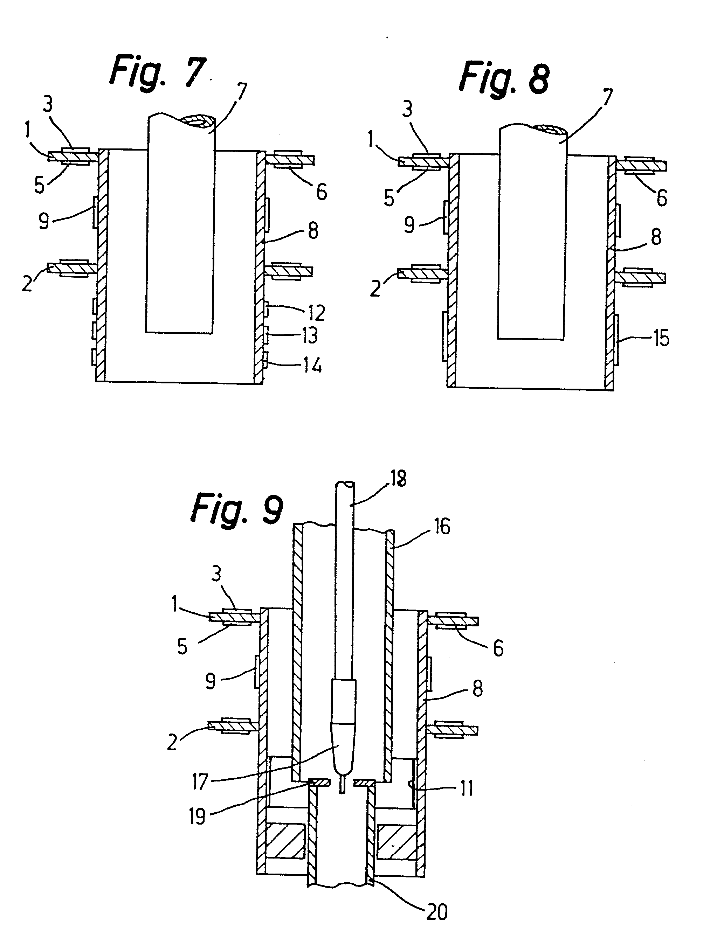

In Fig. 7 ist die Erweiterung der anhand der Fig. 1 bis 4 beschriebenen Sensorspulenanordnung mit einer zusätzlichen induktiven Sensorvorrichtung gezeigt, die ihrerseits aus drei auf dem Hohlzylinder 8 angebrachten Teilwicklungen 12, 13 und 14 besteht. Diese zusätzliche Sensorvorrichtung entspricht der Vorrichtung, die in der EP-A-O 098 238 in Figur 5 dargestellt ist. Sie kann in der dort beschriebenen Weise die Annäherung eines metallischen Körpers in der Sensor-Symmetrieachse feststellen und annäherungsproportionale Ausgangssignale erzeugen. Handelt es sich bei dem Körper um einen solchen, der sich innerhalb der Teilwicklungen 12, 13 und 14 nähert, beispielsweise wieder um das Rohr 7, so kann diese zusätzliche Sensorvorrichtung die Eintauchtiefe des Körpers in einem bestimmten Bereich charakterisieren. Die Teilwicklungen 12 und 14 stellen in bekannter Weise gemäss der genannten EP-A die beiden Teilwicklungen des empfangenden Systems dar, die so angeordnet sind, dass bei abwesendem Metallkörper die durch die Erregerspule 13 in den beiden Wicklungen 12 und 14 induzierten Teil spannungen sich aufheben. Sobald der Metallkörper 7 parallel zur Wicklungsachse der Teilwicklungen 12, 13, 14 sich annähert, wird die Symmetrie der beiden Teilwicklungen 12 und 14 gestört, und am Ausgang der Teilwicklungen erscheint eine annäherungsabhängige Spannung, die mit dem Erreichen einer bestimmten Höhe eine bestimmte Eintauchtiefe charakterisiert.

Eine weitere zusätzliche Sensorvorrichtung für die Ermittlung der Eintauchtiefe eines Metallkörpers 7 in eine erfindungsgemässe Sensorspulenanordnung (gemäss Fig. 1 bis 4) ist in Fig. 8 skizziert. Auf dem Hohlzylinder 8 ist hier eine einfache Spule 15 angebracht, die bei Abwesenheit des Metallkörpers eine bestimmte Leerlauf-Induktivität aufweist. Solche induktiven Annäherungs- bzw. Abstandssensoren sind ebenfalls bekannt. In der vorliegenden erfindungsgemässen Kombination der verschiedenen Sensorelemente hat die zuzätzliche induktive Sensorvorrichtung die Aufgabe, die Eintauchtiefe des metallischen Körpers 7 in die Sensorspulenanordnung dadurch festzustellen, dass die beim Annähern und Eintauchen des Körpers 7 infolge von Wirbelstromeinflüssen und deren Rückwirkung auf das magnetische Feld der Spule sich ändernde Induktivität in bekannter Weise in eine Frequenzänderung umgesetzt wird, die durch eine Frequenzdiskriminator-Schaltung auswertbar ist. Stattdessen kann die Induktivität der Spule 15 auch in einer Induktivitäts-Messbrückenschaltung mit einer bekannten Induktivität verglichen werden, wobei die Messbrücke ein entsprechendes Ausgangssignal erzeugt, das sich in die Eintauchtiefe charakterisierende elektrische Signale umwandeln lässt. Beide Arten der Signalgewinnung sind Stand der Technik und bilden keine ständigen Teile der vorliegenden Erfindung.

Der Vorteil der kapazitiven zusätzlichen Sensorvorrichtung gemäss Fig. 6 und der induktiven Vorrichtung gemäss Fig. 8 liegt besonders in ihrer Einfachheit und darin, dass ihre Betriebsfrequenzen zweckmässigerweise wesentlich höher liegen als die Frequenzen, mit denen die Senderspulen 9 oder 9a, 9b oder 9c, 9d für die Empfängerspulen 3, 4, 5, 6 betrieben werden. Dadurch ist ein für die praktische Ausführung solcher kombinierter Sensoreinrichtungen vorteilhafter hoher Entkopplungsgrad der Signale möglich, und der Gesamtaufbau der den Sensorelementen nachgeschalteten elektronischen Auswertungsschaltungen wird vereinfacht.

Mit den anhand der Fig. 6, 7 und 8 beschriebenen Erweiterungen der erfindungsgemässen Grund-Einrichtung (Fig. 1 bis 4) ist somit die Erfassung eines beispielsweise zylindrischen Metallkörpers 7 innerhalb der Sensorspulenanordnung in den Achsen X und Y sowohl der oberen Trägerscheibe 1 als auch der unteren Trägerscheibe 2 sowie in der z-Achse (Eintauchtiefe in der zusätzlichen Sensorvorrichtung) möglich.

Bei allen beispielhaft beschriebenen Ausbildungsformen der erfindungsgemässen Sensoreinrichtung mit der Kombination mehrerer Empfängerspulen in einer Ringform ist besonders vorteilhaft, dass sich Ringdurchmesser und Ringhöhe beliebig an die für praktische Anwendungen am besten geeigneten Grössen anpassen und ausführen lassen. Dadurch können solche Sensorspulenanordnungen in kleiner Bauform unmittelbar an Roboter-Hände angebaut werden, um ein Werkzeug zu führen, beispielsweise um ein Werkzeug zu einem aus einem Werkstück herausragenden Bolzen sowohl in der Zentrierung als auch in der Achslage und im Abstand genau automatisch auszurichten. Die erfindungsgemässe Ringform lässt dabei zu, dass das Werkzeug auch durch die Sensorspulenanordnung hindurch geführt werden kann, um nach Abschluss der Positionierung und nach Abschalten der Einrichtung von der Steuerung einen Arbeitsvorgang durchzuführen.

Andererseits kann eine solche Sensoreinrichtung auch dazu dienen, die Normallage von Werkzeugen in einer automatischen Bearbeitungsmaschine, beispielsweise einem Roboter, zu kontrollieren und den als Werkzeug-Nullpunkt definierten Lagezustand eines Roboters gegebenenfalls korrigieren zu können, wenn sich dieser im Verlauf des Betriebes des Roboters verändert hat. In einem solchen Anwendungsfall der erfindungsgemässen Sensoreinrichtung wird der Roboter durch seine Steuerung von Zeit zu Zeit, etwa nach jedem Arbeitszyklus, veranlasst, sein Werkzeug in die Sensorspulenanordnung einzutauchen, wodurch diese erforderlichenfalls durch ihre mehrdimensionalen Signale die Roboterantriebe so steuert, dass der Werkzeug-Nullpunkt auf seine Sollposition gebracht wird.

In der Praxis wird dies beispielsweise für Schweissdüsen an Schweissrobotern gefordert. Beim Arbeitsvorgang kann es vorkommen, dass der Schweissdraht einer Schweissdüse am Werkstück verschweisst, wenn der Schweissstrom nach Abschluss des Schweissvorganges abgeschaltet wird. Da der Roboter diesen unerwünschten Zustand nicht erkennen kann, reisst er bei Verlassen seiner letzten Position den Draht ab. Dabei kann es leicht vorkommen, dass sich die Schweissdüse an der Roboterhand verstellt, so dass beim nächsten Schweisszyklus der Roboter zwar seine Sollposition aufsucht, der Werkzeug-Nullpunkt jedoch nicht mit seiner Soll-Lage übereinstimmt, so dass der Schweissvorgang neben der Soll-Lage verlaufen wird.

Für eine solche Anwendung ist es oft erforderlich, nicht nur die Schweissdüse selbst, sondern insbesondere die im Innern der Schutzgasdüse sich befindende Kontakt-Elektrode, aus der der Schweissdraht austritt, genau zu positionieren.

Erfindungsgemäss wird zur Lösung dieser Aufgabe eine weitere induktive, in 4 Quadranten arbeitende Empfängerspulen-Anordnung eingesetzt, die nach dem Erreichen der Zentrierung, Achsausrichtung und Eintauchtiefe, durch die in den Fig. 1 bis 4 gezeigten Sensor-Teilsysteme gesteuert, aktiviert wird und lediglich eine Feinjustierung der Maschine, z.B. des Roboters, auf die Kontaktelektrodenlage veranlasst. Diese zusätzliche Empfängerspulen-Anordnung wird als ein Ausführungsbeispiel in Fig. 9 dargestellt.

Die in Fig. 9 gezeigte Anordnung besitzt wieder den Hohlzylinder 8 mit den beiden Trägerscheiben 1 und 2, auf denen je vier Empfängerspulen 3, 4, 5, 6 getragen sind. Von einer zusätzlichen Sensorvorrichtung für die Erfassung der Eintauchtiefe eines rotationssymmetrischen metallischen Körpers 16 ist beispielhaft der kapazitive Sensor 11 von Fig. 6 angedeutet. Der Körper 16 ist als Schutzgas-Düsenrohr dargestellt, das an einem nicht gezeigten Schweissroboter angebracht ist und in dessen Innerem sich etwa zentrisch eine Kontakelektrode 17 befindet. Durch ein Zuführrohr 18 und die Kontaktelektrode 17 hindurch wird der Schweissdraht zur Schweissstelle vorgeschoben. Die zusätzliche Empfängerspulen-Anordnung besitzt auf einer ringförmigen Trägerscheibe 19 vier zusätzliche Empfängerspulen, die der Uebersichtlichkeit halber nicht eingezeichnet sind. Die zusätzlichen Empfängerspulen sind gleich ausgebildet und angeordnet wie die Empfängerspulen 3, 4, 5, 6 auf den Trägerscheiben 1 und 2, sie sind jedoch kleiner und haben von der Referenzachse einen kleineren Abstand als die Empfängerspulen 3, 4, 5, 6. Im Inneren der ringförmigen Trägerscheibe 19 findet beim Eintauchen des Düsenrohres 16 in die Sensorspulenanordnung der Schweissdraht Platz. Ueber eine nicht näher dargestellte Hubvorrichtung 20 lässt sich erforderlichenfalls die Trägerscheibe 19 mit den zusätzlichen Feinführungs-Empfängerspulen auch in das Düsenrohr 16 hinein anheben, um eine noch genauere Ausrichtung der Kontaktelektrode 17 zu erreichen und um die Einwirkung des Schweissdrahtes zu eliminieren.

In einer solchen Gesamt-Einrichtung kann der Positionierungsvorgang zweckmässigerweise wie folgt ablaufen:

1. Das Düsenrohr 16 taucht von oben kommend in die Sensorspulenanordnung ein, mit den Empfängerspulen des Trägerringes 1 wird dabei auf Zentrierung in der x- und der y-Richtung geregelt.

2 Bei weiterem Eintauchen übernehmen auch die Empfängerspulen des Trägerrringes 2 die Zentrierung in x- und y-Richtung. Dadurch wird die Achslage des Düsenrohrs fortlaufend korrigiert, wenn das Düsenrohr weiter eintaucht.

3. Die zusätzliche Sensorvorrichtung 11 steuert die Abschaltung bzw. die Stillsetzung der Eintauchbewegung in einer unteren Soll-Lage.

4. Die Empfängerspulen der Trägerscheiben 1 und 2 werden abgeschaltet, die Trägerscheibe 19 wird erforderlichenfalls angehoben, und die darauf angeordneten zusätzlichen Empfängerspulen werden aktiviert.

5. Das Düsenrohr wird, gesteuert durch die Signale aus den zusätzlichen Empfängerspulen, parallel in x-und y-Richtung so verfahren, dass die Kontaktelektrode 17 in Soll-Lage kommt.

6. Korrekturwerte der Lage, die durch die erfindungsgemässe Einrichtung korrigiert wurde, werden aus den Weggebern des Schweissroboters in dessen Steuerung übernommen.

7. Das Düsenrohr 16 wird aus der Sensorspulenanordnung wieder herausgezogen, und der Roboter beginnt den nächsten Arbeitszyklus.

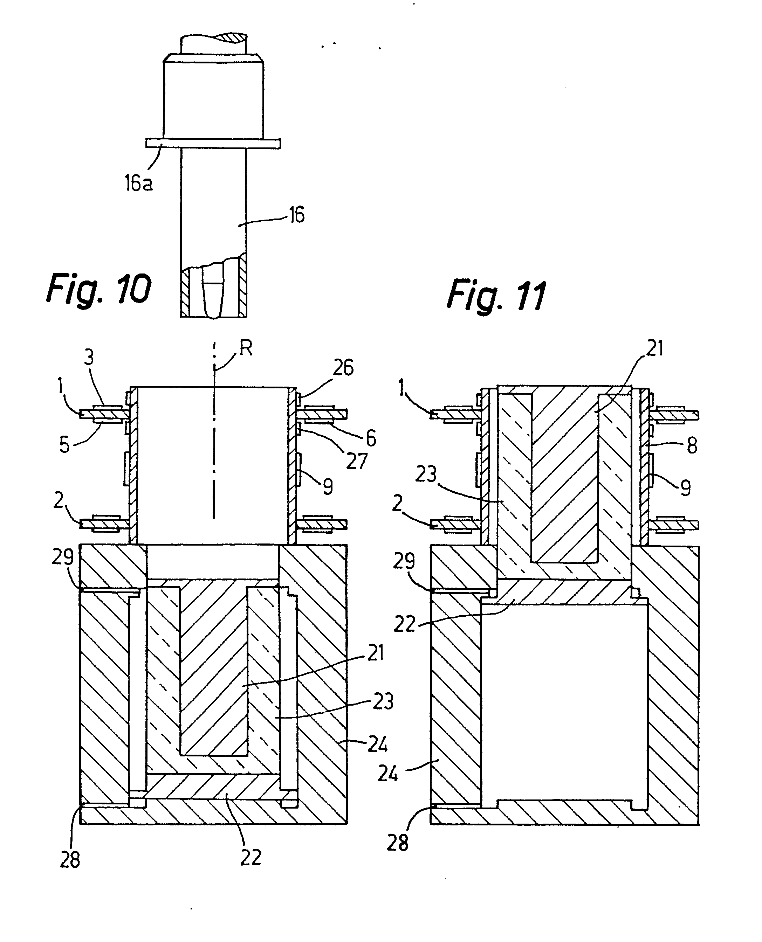

Die Ausführungsform gemäss Fig. 10 und 11 besitzt zusätzlich zu den anhand der Fig. 1 bis 4 beschriebenen Elementen eine Eichvorrichtung mit einer Nachbildung 21, 22 des in die Sensorspulenanordnung einführbaren rotationssymmetrischen Körpers, der in Fig. 10 wiederum als Schutzgas-Düsenrohr 16 dargestellt ist. Die Nachbildung 21, 22 besteht aus einem metallischen Zapfen 21, dessen Aeusseres dem Aeusseren des Düsenrohres 16 entspricht und der über ein nichtmetallisches Verbindungselement 23 mit einer metallischen unteren Abschlussplatte 22 verbunden ist. Das Verbindungselement 23 ist hier zylindrisch ausgebildet und in einer Bohrung in einem oberen Flansch eines Pneumatikzylinders 24 axial verschiebbar geführt, auf dem die Sensorspulenanordnung mit dem Spulenträger 1, 2, 8 befestigt ist. Ein unterer Flansch an der Abschlussplatte 22 wirkt als Kolben im Pneumatikzylinder 24.

In Fig. 10 ist die Nachbildung 21, 22 nach unten in den Pneumatikzylinder 24 zurückgezogen dargestellt. Bei dieser Stellung dient die Sensorspulenanordnung zum Kontrollieren und/oder Korrigieren der Zentrierung und Achsausrichtung des Düsenrohres 16, das beispielsweise von einem Roboter von oben in die Sensorspulenanordnung eingeführt wird. Die Höhenlge des Düsenrohres 16 in der Sensorspulenanordnung wird dabei wieder mit einer zusätzlichen Sensorvorrichtung überwacht, welche beispielsweise Sensorwicklungen 26, 27 auf dem oberen Ende des Hohlzylinders 8 aufweist. Die Sensorwicklungen 26, 27 stellen die Annäherung eines auf dem Düsenrohr 16 vorhandenen Flansches 16a fest.

In der Praxis wird gefordert, dass die Sensorspulenanordnung die Lage des eingeführten Düsenrohres 16 mit einer Genauigkeit von mindestens ± 0,1 mm vermessen kann. Diese Genauigkeit ist nicht einfach zu erreichen, und noch schwieriger ist es, sie über längere Zeiträume aufrechtzuerhalten. Mit der Nachbildung 21, 22 ist es nun möglich, die Genauigkeit in beliebig wählbaren Zeitabständen zu überprüfen und nötigenfalls zu korrigieren. Dazu wird, von einem Ventil gesteuert, Druckluft durch einen Einlass 28 in den Pneumatikzylinder 24 eingeführt, um die Nachbildung 21, 22 in die in Fig. 11 gezeigte Lage nach oben zu bewegen, in der sich die Nachbildung 21, 22 genau in einer vorbestimmten Soll-Lage für das Düsenrohr 16 befindet. Die nun in den Empfängerspulen induzierten Spannungen werden einer Auswertungsschaltung (nicht dargestellt) zugeführt, welche Mittel enthält, mit denen die Ausgangssignale der Schaltung auf vorbestimmte Werte, insbe sondere auf null, eingestellt werden. Damit ist die ganze Einrichtung wieder so nachgeeicht, dass bei einem nachfolgenden Kontrollieren und ggf. Einstellen der Lage eines Düsenrohres 16 die Ausgangssignale genau ihre vorbestimmten Werte haben, insbesondere null sind, wenn das Düsenrohr 16 seine Soll-Lage in der Sensorspulenanordnung einnimmt. Vor diesem nachfolgenden Einführen des Düsenrohres 16 wird natürlich die Nachbildung 21, 22 wieder in die in Fig. 10 gezeigte untere Stellung gesenkt, was durch Einführen von Druckluft in den Pneumatikzylinder 24 durch einen oberen Einlass 29 geschieht.

In der beschriebenen Weise können Abweichungen kompensiert werden, die in der Sensorspulenanordnung z.B. durch Temperatureinflüsse, mechanische Beanspruchung, Alterung, Verschmutzung (beispielsweise durch Schweissspritzer) usw. auftreten, sowie auch allfällige Drifterscheinungen in der Auswertungsschaltung selbst. Alternativ kann, wenn sich das Rohr 16 hinreichend genau in der Sensorspulenanordnung positionieren lässt, eine Art Kontrolle des Düsenrohres 16 (oder anderen Werkzeuges) selbst durchgeführt werden, indem die Ausgangssignale bei eingeführtem Rohr 16 mit den Ausgangssignalen bei eingeführter Nachbildung 21, 22 verglichen werden.

Die mechanische Positionierung der Nachbildung 21, 22 in die Sensorspulenanordnung kann natürlich auch anders als mit dem beschriebenen Pneumatikzylinder 24 erfolgen, z.B. linear von unten mit einem Motorantrieb oder gewünschtenfalls, mit allerdings komplizierteren Führungs- und Bewegungsmitteln, auch von oben.

**Patentansprüche**

1. Einrichtung zum Ermitteln der Lage eines rotationssymmetrischen, elektrisch leitenden Körpers (7; 16) bezüglich einer Referenzachse (R), dadurch gekennzeichnet, dass in wenigstens einer ersten und einer zweiten zur Referenzachse (R) etwa senkrechten Ebene je wenigstens drei gleiche, von der Referenzachse beabstandete und bezüglich einander um die Referenzachse verdrehte Empfängerspulen (3, 4, 5, 6) angeordnet sind, in denen durch wenigstens eine an einen HF-Generator angeschlossene, bezüglich der Referenzachse zentrierte Senderspule (9; 9a, 9b; 9c, 9d) Spannungen induzierbar sind, welche einer Auswertungsschaltung zum Vergleichen der induzierten Spannungen und Erzeugen von die Exzentrizität des Körpers (7; 16) bezüglich der Referenzachse in der betreffenden Ebene anzeigenden Signalen zugeführt sind.

2. Einrichtung nach Anspruch 1, dadurch gekennzeichnet, dass in jeder der Ebenen je vier Empfängerspulen (3, 4, 5, 6) angeordnet sind, die einander bezüglich des Schnittpunktes der Referenzachse mit der Ebene paarweise gegenüberliegen.

3. Einrichtung nach Anspruch 1 oder 2, dadurch gekennzeichnet, dass die Empfängerspulen (3, 4, 5, 6) beider Ebenen auf einem gemeinsamen Spulenträger (1, 2, 8) getragen sind.

4. Einrichtung nach Anspruch 3, dadurch gekennzeichnet, dass die Empfängerspulen (3, 4, 5, 6) von auf den Spulenträger (1, 2, 8) aufgetragenen metallischen Schichten gebildet sind.

5. Einrichtung nach Anspruch 3 oder 4, dadurch gekennzeichnet, dass die Senderspule (9) bzw. Senderspulen (9a, 9b; 9c, 9d) ebenfalls auf dem Spulenträger (1, 2, 8) getragen ist bzw. sind.

6. Einrichtung nach einem der Ansprüche 1 bis 5, dadurch gekennzeichnet, dass die Senderspule (9) den Empfängerspulen (3, 4, 5, 6) beider Ebenen gemeinsam zugeordnet ist.

7. Einrichtung nach einem der Ansprüche 1 bis 5, dadurch gekennzeichnet, dass den Empfängerspulen (3, 4, 5, 6) jeder Ebene je eine eigene Senderspule (9a, 9b; 9c, 9d) zugeordnet ist und dass die beiden Senderspulen an zwei mit unterschiedlichen Frequenzen arbeitende HF-Generatoren angeschlossen sind.

8. Einrichtung nach einem der Ansprüche 1 bis 7, gekennzeichnet durch eine zusätzliche kapazitive oder induktive Sensorvorrichtung (11; 12, 13, 14; 26, 27) zum Erzeugen eines die axiale Position des Körpers längs der Referenzachse anzeigenden Signals.

9. Einrichtung nach Anspruch 8, dadurch gekennzeichnet, dass die zusätzliche Sensorvorrichtung (11; 12, 13, 14; 26, 27) mit Wechselstrom gespeist ist, dessen Frequenz höher liegt als die Frequenz des die Senderspule speisenden HF-Generators.

10. Einrichtung nach einem der Ansprüche 1 bis 9, dadurch gekennzeichnet, dass in einer dritten zur Referenzachse (R) etwa senkrechten Ebene ebenfalls wenigstens drei gleiche, bezüglich einander um die Referenzachse verdrehte Empfängerspulen angeordnet sind, die von der Referenzachse einen kleineren Abstand haben als die in der ersten und der zweiten Ebene angeordneten Empfängerspulen (3, 4, 5, 6) (Fig. 9).

11. Einrichtung nach Anspruch 10, dadurch gekennzeichnet, dass die dritte Ebene bezüglich der ersten und der zweiten Ebene längs der Referenzachse verschiebbar ist.

12. Einrichtung zum Ermitteln der Lage eines rotationssymmetrischen, elektrisch leitenden Körpers (16) bezüglich einer Referenzachse (R), mit einer Sensorspulenanordnung, in welche der Körper einführbar ist, insbesondere nach einem der Ansprüche 1 bis 11, gekennzeichnet durch eine Eichvorrichtung mit einer Nachbil dung (21, 22) des rotationssymmetrischen Körpers (16) und Mitteln (24, 28, 29) zum Einführen dieser Nachbildung in die Sensorspulenanordnung in eine mit der Referenzachse koaxiale Lage.

13. Einrichtung nach Anspruch 12, dadurch gekennzeichnet, dass in einer elektronischen Auswertungsschaltung, der die Signale der Sensorspulen zugeführt sind, Mittel enthalten sind zum Einstellen der Ausgangssignale der Schaltung auf vorbestimmte Werte, insbesondere auf null, bei in die Sensorspulenanordnung eingeführter Nachbildung (21, 22).

14. Einrichtung nach Anspruch 12 oder 13, dadurch gekennzeichnet, dass die Nachbildung (21, 22) für das Einführen in die Sensorspulenanordnung längs der Referenzachse linear verschiebbar geführt ist und mittels einer Antriebseinrichtung, insbesondere eines Pneumatikzylinders (24), bewegbar ist.

15. Verwendung der Einrichtung nach einem der Ansprüche 1 bis 9 oder 12 bis 14 zum Ausrichten des Körpers (7; 16) mit der Referenzachse (R) und ggf. Positionieren des Körpers längs der Referenzachse, dadurch gekennzeichnet, dass die Signale der Auswertungsschaltung und ggf. der zusätzlichen Sensorvorrichtung der Steuerung eines den Körper oder die Referenzachse bewegenden Roboters zugeführt sind.

16. Verwendung der Einrichtung nach Anspruch 10 oder 11 zum Ausrichten des Körpers (16) mit der Referenzachse (R) und ggf. Positionieren des Körpers längs der Referenzachse, dadurch gekennzeichnet, dass zuerst die die Exzentrizität des Körpers (16) in der ersten und in der zweiten Ebene anzeigenden Signale und ggf. die Signale der zusätzlichen Sensoreinrichtung und nachher Signale, welche die Exzentrizität des Körpers in der dritten Ebene anzeigen, der Steuerung eines den Körper oder die Referenzachse bewegenden Roboters zugeführt sind.

0292426

Fig. 1
Fig. 2
Fig. 3
Fig. 4
Fig. 5
Fig. 6

0292426

Fig. 7

Fig. 8

Fig. 9

0292426

Fig. 10

Fig. 11